# EUROPEAN PATENT SPECIFICATION

(11) **EP 3 610 183 B1**
(45) Date of publication and mention of the grant of the patent: **11.05.2022**
(21) Application number: 18715244.2
(22) Date of filing: 23.03.2018
(51) Int. Cl.: F16L 1/26, F16L 55/10

(54) **PIPELINE COUPLING**
ROHRLEITUNGSKUPPLUNG
RACCORD DE CANALISATION

(30) Priority: 24.03.2017 GB 201704691
(43) Date of publication of application: 19.02.2020
(73) Proprietor: Gall Thomson Environmental Limited, Tewkesbury GL20 8UQ (GB)
(72) Inventor: HIGGINS, Steven, Norwich Norfolk NR2 2AP (GB)
(74) Representative: Potter Clarkson
(86) International application number: PCT/GB2018/050765
(87) International publication number: WO 2018/172789

(56) References cited:
- US-A- 5 456 501
- US-A1- 2014 116 515
- US-A1- 2016 229 680

## Description

The invention relates to a pipeline coupling, preferably for use as a breakaway coupling (such as a marine breakaway coupling) or a release coupling (such as an emergency release coupling).

Pipeline couplings are used in situations where a fluid conduit may be exposed to a tensile loading which, in the absence of a pipeline coupling, could cause the fluid conduit to fracture. Typically such a fluid conduit may be one used for carrying material between two locations, e.g. between ships or between a ship and a dock. If such a fracture occurs, the material being conveyed along the fluid conduit flows freely out of the fractured ends of the fluid conduit. This can cause significant spillage that is expensive to clear and may be environmentally undesirable. The presence of a pipeline coupling enables the fluid conduit to fracture at a specified location (i.e. at the coupling) and for spillage to be avoided by a valve moving to its valve closed position to close the hollow bore of the fluid conduit when the fluid conduit fractures. US 2016/229680 A1 discloses a coupling comprising a first body member and a second body member which are operative to releasably connect together.

According to a first aspect of the invention, there is provided a pipeline coupling, for use in a fluid conduit, as defined in claim 1. The pipeline coupling comprises:
a pair of shut-off valve housings releasably coupled to each other, the shut-off valve housings defining a hollow bore along which flowable material may flow, the shut-off valve housings configured to be decoupleable from each other;
a distance monitoring device configured to monitor a separation distance between the shut-off valve housings when they are coupled to each other; and
an indication device configured to provide an indication when the distance monitoring device detects that the separation distance between the shut-off valve housings reaches or exceeds a reference threshold value.

During normal operation the pipeline coupling may be subjected to tensile and axial loads which can arise during installation, internal pressure surges in the pipeline, towing or manoeuvring of objects attached to the fluid conduit, and changes in the environment such as waves. These loads may be sufficiently large to cause the movement of the shut-off valve housings relative to each other, without being large enough to cause the shut-off valve housings to decouple from each other. Such movement of the shut-off valve housings could have a detrimental effect on the intended operation of the pipeline coupling. For example, relative movement between the shut-off valve housings over a prolonged period of time may lead to a deterioration in performance of fasteners (e.g. breakstuds) arranged to selectively couple and decouple the shut-off valve housings, thus causing a reduction in precision of the operation of the pipeline coupling to decouple the shut-off valve housings from each other.

The provision of the distance monitoring and indication devices in the pipeline coupling of the invention enables the monitoring of the relative positions of the coupled shut-off valve housings such that an indication is provided when the intended operation of the pipeline coupling has been compromised by an undesirable separation between the coupled shut-off valve housings, thus allowing the integrity of the pipeline coupling to be reliably monitored. In addition the distance monitoring and indication devices of the invention provide in-situ monitoring of the integrity of the pipeline coupling without requiring any disassembly or refurbishment of the pipeline coupling.

The reference threshold value may be defined to suit a wide range of specific separation distance values depending on the parameters of the pipeline coupling and its operating conditions. The distance monitoring and indication devices of the invention can be used in a variety of pipeline couplings across a wide range of operating situations, and can be readily configured to only add a relatively low amount of weight to the pipeline coupling in comparison to the weight added in structurally redesigning the shut-off valve housings to protect against the detrimental effect brought about by the movement of the shut-off housings.

According to the invention, the distance monitoring device includes a direct contact sensing device configured to monitor the separation distance between the shut-off valve housings when they are coupled to each other.

The direct contact sensing device is able to detect any separation between the coupled shut-off valve housings by being in physical contact with the shut-off valve housings. The configuration of the distance monitoring device in this manner improves the reliability of the distance monitoring device by minimising the risk of a foreign object interfering with the direct contact sensing device's monitoring of the separation distance between the coupled shut-off valve housings.

The direct contact sensing device may be configured in a variety of ways in order to monitor the separation distance between the coupled shut-off valve housings, examples of which are set out as follows.

According to the invention, the direct contact sensing device includes a plunger coupled to a first of the shut-off valve housings, the plunger is arranged to be in contact with a second of the shut-off valve housings, and the direct contact sensing device is configured to detect a displacement of the plunger when the shut-off valve housings are coupled to each other.

Such a direct contact sensing device can be readily configured for use with the shut-off valve housings without interfering with the flow of flowable material along the hollow bore. The direct contact sensing device may include an actuator configured to apply a force that urges the plunger to be in contact with the second shut-off valve housing. The actuator may be selected from, but not limited to, a group including: a mechanical actuator, a pneumatic actuator, and a hydraulic actuator.

The actuator provides a reliable means for ensuring that the plunger stays in contact with the second shut-off valve housing when the shut-off valve housings are coupled to each other.

Optionally the direct contact sensing device may include a fluid reservoir. The plunger may be arranged to seal the fluid reservoir under pressure when the separation distance between the shut-off valve housings is below the reference threshold value. The plunger may be arranged so that, when the separation distance between the shut-off valve housings reaches or exceeds the reference threshold value, the displacement of the plunger breaks the seal on the fluid reservoir to cause a reduction in pressure of the fluid reservoir. The distance monitoring device may be configured to communicate the reduction in pressure of the fluid reservoir to the indication device.

In addition the direct contact sensing device may include a seal. The plunger may be arranged to engage the seal so as to seal the fluid reservoir under pressure when the separation distance between the shut-off valve housings is below the reference threshold value. The plunger may be arranged to disengage from the seal so as to break the seal on the fluid reservoir when the separation distance between the shut-off valve housings reaches or exceeds the reference threshold value.

To facilitate the above engagement and disengagement of the plunger with the seal, the plunger may include first and second plunger portions. The first plunger portion may be shaped to engage the seal so as to seal the fluid reservoir under pressure when the separation distance between the shut-off valve housings is below the reference threshold value. The second plunger portion may be shaped to be spaced apart from the seal so as to break the seal on the fluid reservoir when the separation distance between the shut-off valve housings reaches or exceeds the reference threshold value. Optionally the second plunger portion may be narrower in width than the first plunger portion.

Optionally the fluid reservoir may be configured to cooperate with the plunger so that the sealing of the fluid reservoir under pressure applies a force that urges the plunger to be in contact with the second shut-off valve housing. This allows for a compact configuration of the direct contact sensing device.

In further embodiments of the invention, the distance monitoring device may include, in addition to the direct contact sensing device, a non-contact sensing device configured to monitor the separation distance between the shut-off valve housings when they are coupled to each other.

The non-contact sensing device is able to detect any separation between the shut-off valve housings without being in physical contact with one or both of the shut-off valve housings. It is possible to use a wide range of non-contact sensing devices without being limited by the structure of the shut-off valve housings. Moreover the non-contact sensing device may be configured to have no moving parts or a minimal number of moving parts, which improves the reliability of the distance monitoring device.

The non-contact sensing device may be configured in a variety of ways in order to monitor the separation distance between the coupled shut-off valve housings, examples of which are set out as follows.

The non-contact sensing device may include a proximity sensor.

The distance monitoring device may include an optical sensing device configured to optically monitor the separation distance between the shut-off valve housings when they are coupled to each other. The optical sensing device may include, for example, a diffuse-reflective proximity sensor.

The distance monitoring device may include an electrical sensing device configured to electrically monitor the separation distance between the shut-off valve housings when they are coupled to each other. The electrical sensing device may include, for example, an inductive proximity sensor or an ultrasonic proximity sensor.

The indication device may be configured in a variety of ways in order to provide an indication when the distance monitoring device detects that the separation distance between the shut-off valve housings reaches or exceeds a reference threshold value, examples of which are set out as follows.

The indication device may include a visual indicator configured to provide a visual indication when the distance monitoring device detects that the separation distance between the shut-off valve housings reaches or exceeds a reference threshold value. For example, the visual indicator may take the form of a gauge.

The indication device may include an electrical or electronic indicator configured to provide an electrical or electronic indication when the distance monitoring device detects that the separation distance between the shut-off valve housings reaches or exceeds a reference threshold value. For example, the electrical or electronic indicator may take the form of a light indicator (such as a light beacon), an electrical contact switch (e.g. a pressure switch), or a sound indicator (such as a siren).

The indication device may be configured for communication with a remote monitoring unit, and the indication device may be configured to transmit, in use, electrical or electronic information to the remote monitoring unit when the distance monitoring device detects that the separation distance between the shut-off valve housings reaches or exceeds a reference threshold value. The electrical or electronic information may be in the form of a data signal or an electronic message, and the remote monitoring unit may be a display or a computer.

In still further embodiments of the invention, the pipeline coupling may further include at least one shut-off valve located within the hollow bore of at least one of the shut-off valve housings, the or each shut-off valve including a valve member movable between a valve open position and a valve closed position in which the valve member shuts off the flow of a flowable material through the hollow bore, the or each valve member being biased to move to its valve closed position on separation of the shut-off valve housings.

In such embodiments, the or each shut-off valve may be a PETAL VALVE^{™} valve or a FLIP-FLAP^{™} valve.

According to a second aspect of the invention, there is provided a use of a pipeline coupling as a breakaway coupling or a release coupling, wherein the pipeline coupling is in accordance with the first aspect of the invention or any one of its embodiments.

The features and advantages of the pipeline coupling of the first aspect of the invention and its embodiments apply mutatis mutandis to the use of the pipeline coupling of the second aspect of the invention.

It will be understood that the use of the terms "first" and "second" and the like in the patent specification is merely intended to help distinguish between similar features (e.g. the first and second shut-off valve housings), and is not intended to indicate the relative importance of one feature over another feature.

A preferred embodiment of the invention will now be described, by way of a non-limiting example, with reference to the accompanying drawings in which:
Figures 1 and 2 show schematically a pipeline coupling according to an embodiment of the invention;
Figures 3 and 4 shows schematically the distance monitoring device and an indication device of the pipeline coupling of Figures 1 and 2; and
Figure 5 shows a close-up view of a plunger of a distance monitoring device of Figures 3 and 4.

The figures are not necessarily to scale, and certain features and certain views of the figures may be shown exaggerated in scale or in schematic form in the interests of clarity and conciseness.

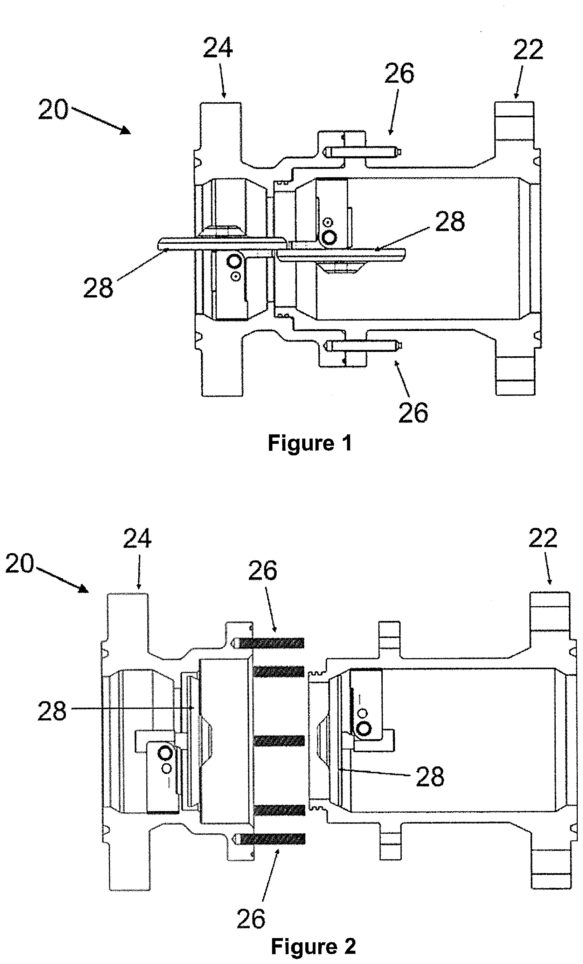

A pipeline coupling according to an embodiment of the invention is shown in Figures 1 and 2, and is designated generally by the reference numeral 20. The pipeline coupling is preferably for use as a breakaway coupling (such as a marine breakaway coupling) or a release coupling (such as an emergency release coupling).

The pipeline coupling 20 comprises a pair of shut-off valve housings 22,24 directly secured to each other by means of a plurality of fastening arrangements 26, as shown in Figure 1. The shut-off valve housings 22,24 define a hollow bore along which flowable material may flow. In use, the shut-off valve housings 22,24 are respectively coupled to first and second pipeline portions such that securing the shut-off valve housings 22,24 to each other interconnects the first and second pipeline portions to form a pipeline.

A respective shut-off valve is located within the hollow bore of each shut-off valve housing, and each shut-off valve includes a shut-off valve member 28 movable between a valve open position and a valve closed position. In the valve open position, each shut-off valve member 28 bisects the hollow bore of the respective shut-off valve housing. In the valve closed position (not shown) the shut-off valve member 28 sealingly engages against a valve seat defined about the circumference of the respective shut-off valve housing and shuts off the flow of a flowable material through the hollow bore.

Each shut-off valve member 28 is biased to move to its valve closed position on separation of the shut-off valve housings 22,24. Each shut-off valve member 28 is mounted on a pivot shaft and is biased to move to its valve closed position by means of a spring. The spring preferably includes contra wound spring portions mounted on opposite ends of the pivot shaft and engaged with the shut-off valve members 28 so as to bias each of the shut-off valve members 28 towards the valve closed position.

The shut-off valves are located in the shut-off valve housings 22,24 in opposed configurations such that, whilst the shut-off valve housings 22,24 are secured to each other, the opposing shut-off valve members 28 interleave with each other when they are in their valve open positions, as shown in Figure 1. This engagement allows each shut-off valve member 28 to oppose movement of the other shut-off valve member 28 until separation of the shut-off valve housings 22,24 moves the shut-off valve members 28 out of engagement with each other and the bias provided by the springs causes the shut-off valve members 28 to move to their valve closed positions. Figure 2 shows the separation of the shut-off valve housings 22,24 and the consequential closure of the shut-off valve members 28.

In the embodiment shown, the shut-off valve arrangement is referred to by the applicant as a FLIP-FLAP^{™} valve arrangement, examples of which are described in EP 2 000 730 A2. It is envisaged that, in other embodiments of the invention, the shut-off valve arrangement may be replaced by other shut-off valve arrangements, including a valve arrangement referred to by the applicant as a PETAL VALVE^{™} valve arrangement (such as described in EP 0 006 278 A1 and GB 2051993 A) and a sleeve-based valve arrangement (such as described in GB 2391051 A).

In an exemplary PETAL VALVE^{™} valve arrangement (not shown), a respective PETAL VALVE^{™} valve is located within the hollow bore of each shut-off valve housing. Each PETAL VALVE^{™} valve includes a plurality of petal elements, each of which has a pivot portion and a valve portion. Each PETAL VALVE^{™} valve may include any number of petal elements. The plurality of petal elements may be identical in shape and/or size, or may differ from each other in terms of their shapes and/or sizes.

The valve portion of each petal element is pivotally moveable relative to the hollow bore via the respective pivot portion that is pivotally mounted to the wall of the respective shut-off valve housing. Each petal element is moveable between a fully retracted position which corresponds to a valve open position of the corresponding PETAL VALVE^{™} valve, and a fully extended position which corresponds to a valve closed position of the corresponding PETAL VALVE^{™} valve. In the valve closed position of each PETAL VALVE^{™} valve, all the valve portions abut one another to form a cone which faces or opposes the direction of flow of the flowable material along the pipeline. For each PETAL VALVE^{™} valve, the apex of the cone defines a meeting point for all the petal elements when the PETAL VALVE^{™} valve is in the valve closed position. The edge of one or more of the petal elements may optionally include a seal formed thereon.

Each PETAL VALVE^{™} valve when in the valve open position opens the hollow bore of the corresponding shut-off valve housing so as to allow flowable material to flow along the hollow bore. Each PETAL VALVE^{™} valve when in the valve closed position closes the hollow bore of the corresponding shut-off valve housing so as to prevent flowable material from flowing along the hollow bore.

In other embodiments of the invention, it is envisaged that the pipeline coupling may include only one of the shut-off valves, with the single shut-off valve being located in one of the shut-off valve housings.

The fastening arrangements 26 may be configured to permit controlled separation of the shut-off valve housings 22,24 from each other on operation of an actuator operably engaged with each fastening arrangement 26.

Additionally or alternatively the fastening arrangements 26 may be configured to each include a respective frangible element such as a breakstud, which is formed to include a weakened portion that breaks on exposure to a tensile load exceeding a predetermined limit. Such a tensile load may be applied to the pipeline as a result of unexpected movement of objects connected to the ends of the pipeline or due to excessive pressure within the pipeline. The use of a respective breakstud with the weakened portion permits the automatic separation of the shut-off valve housings 22,24 in response to the tensile load exceeding a predetermined limit. More particularly, upon application of such a tensile load, each breakstud breaks at its weakest section, thus permitting the shut-off valve housings 22,24 to separate from each other. Such automatic separation can be carried out independently of any control and/or monitoring system.

As mentioned above, the pipeline coupling 20 during normal operation may be adversely affected by tensile and axial loads which may be sufficiently large to cause the movement of the shut-off valve housings 22,24 relative to each other, without being large enough to cause the shut-off valve housings 22,24 to decouple from each other. Thus a gap can be formed between the shut-off valve housings 22,24 without requiring the decoupling of the shut-off valve housings 22,24 from each other.

In order to ensure that the pipeline coupling 20 operates as intended, it is desirable to maintain the size of the gap between the shut-off valve housings 22,24 below a level that would adversely affect the operation of the pipeline coupling 20. In this embodiment, a reference threshold value is defined as a non-zero separation distance between the shut-off valve housings 22,24 that would be detrimental to the operation of the pipeline coupling 20.

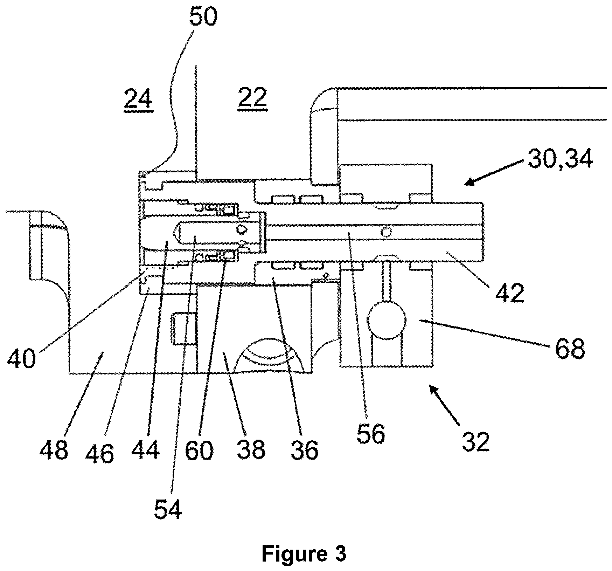

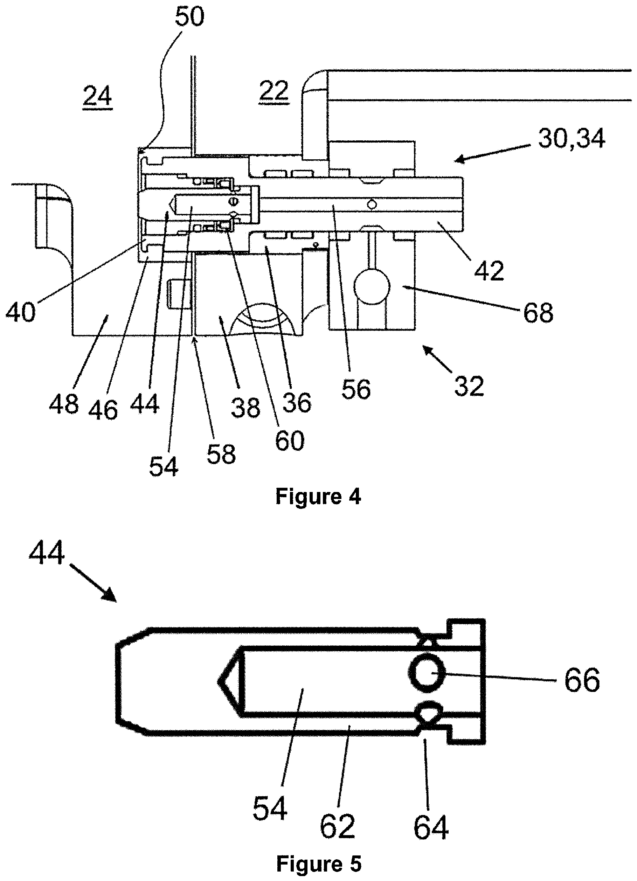

The pipeline coupling 20 further includes a distance monitoring device 30 and an indication device 32. Figures 3 and 4 show schematically the distance monitoring device 30 and the indication device 32. The distance monitoring device 30 includes a direct contact sensing device 34 configured to monitor a separation distance between the shut-off valve housings 22,24 when they are coupled to each other.

The direct contact sensing device 34 includes a plunger housing 36 that is retained in a collar 38 of a first 22 of the shut-off valve housings 22,24. The plunger housing 36 includes first and second plunger housing sections 40,42 defining opposite ends of the plunger housing 36.

The direct contact sensing device 34 includes a plunger 44 slidably mounted within a bore of the first plunger housing section 40. The plunger 44 is arranged to permit sliding axial movement of the plunger 44 within the bore of the first plunger housing section 40. A close up view of the plunger 44 is shown in Figure 5.

The first plunger housing section 40 is partially retained in the collar 38 of the first shut-off valve housing 22 such that the first plunger housing section 40 extends out of the collar 38 of the first shut-off valve housing 22 and into a receptacle 46 in a collar 48 of a second 24 of the shut-off valve housings 22,24 when the shut-off valve housings 22,24 are coupled to each other. The plunger 44 is arranged to also extend out of the collar 38 of the first shut-off valve housing 22 and into the receptacle 46 of the collar 48 of the second shut-off valve housing 24 when the shut-off valve housings 22,24 are coupled to each other, such that the plunger 44 abuts an internal contact face 50 of the receptacle 46.

It will be understood that the first plunger housing section 40 and the plunger 44 are not required to extend into the second shut-off valve housing 24 as long as they are arranged to be in contact with a surface of the second shut-off valve housing 24.

The second plunger housing section 42 is partially retained in the collar 38 of the first shut-off valve housing 22 such that the second plunger housing section 42 extends out of the collar 38 of the first shut-off valve housing 22 so as to protrude into the exterior of the first shut-off valve housing 22.

The direct contact sensing device 34 further includes a hydraulic fluid reservoir 54 stored inside a bore of the plunger 44. A bore 56 of the second plunger housing section 42 is configured to be in fluid communication with the bore of the plunger 44. The hydraulic fluid reservoir 54 of the plunger 44 and the bore 56 of the second plunger housing section 42 are pressurised and sealed to apply a force that urges the plunger 44 against the internal contact face 50 of the receptacle 46 of the collar 48 of the second shut-off valve housing 24. When a gap 58 forms between the shut-off valve housings 22,24, the applied force maintains the plunger 44 in abutment with the internal contact face 50 of the receptacle 46 of the collar 48 of the second shut-off valve housing 24 so that the displacement of the plunger 44 corresponds to the size of the gap 58 (i.e. the separation distance) between the shut-off valve housings 22,24.

Optionally a mechanical actuator (not shown), such as a spring, may be configured to assist the hydraulic fluid reservoir 54 in applying a mechanical force to urge the plunger 44 against the internal contact face 50 of the receptacle 46 of the collar 48 of the second shut-off valve housing 24.

The direct contact sensing device 34 includes an annular seal 60 mounted inside the bore of the first plunger housing section 40 such that the plunger 44 extends through an aperture of the annular seal 60. The plunger 44 includes first and second plunger portions 62,64, with the second plunger portion 64 being narrower in diameter than the first plunger portion 62. The plunger 44 includes a plurality of drain holes 66 extending radially outwards from its bore and out of the second plunger portion. The provision of the drain holes 66 allows fluid to exit the hydraulic fluid reservoir 54 via the drain holes 66 and into the bore of the first plunger housing section 40.

Figure 3 shows schematically the configuration of the pipeline coupling 20 when there is no gap between the coupled shut-off valve housings 22,24.

The plunger 44 and seal 60 are arranged to overlap the first plunger portion 62 and seal 60 when there is no gap between the shut-off valve housings 22,24. The lack of a gap between the shut-off valve housings 22,24 means that the separation distance between the shut-off valve housings 22,24 is below the reference threshold value. The diameter of the first plunger portion 62 is defined to be wider than the diameter of the aperture of the annular seal 60 in order to provide the sealing engagement between the overlapping first plunger portion 62 and seal 60, which restricts the exit of fluid from the hydraulic fluid reservoir 54 via the drain holes 66 and into the bore of the first plunger housing section 40. This has the effect of sealing the hydraulic fluid reservoir under pressure when there is no gap between the shut-off valve housings 22,24.

Figure 4 shows schematically the configuration of the pipeline coupling 20 when a gap 58 forms between the coupled shut-off valve housings 22,24.

When the gap starts to form between the shut-off valve housings 22,24, the plunger 44 is displaced relative to the seal 60 as a result of the aforementioned applied force. As long as the separation distance between the shut-off valve housings 22,24 stays below the reference threshold value, the sealing engagement between the first plunger portion 62 and seal 60 is maintained to continue sealing the hydraulic fluid reservoir 54 under pressure.

When the separation distance between the shut-off valve housings 22,24 reaches or exceeds the reference threshold value, the plunger 44 is sufficiently displaced relative to the seal 60 such that the first plunger portion 62 and seal 60 no longer overlap, thereby disengaging the first plunger portion 62 from the seal 60, but instead the second plunger portion 64 now overlaps the seal 60. The diameter of the second plunger portion 64 is defined to be narrower than the diameter of the aperture of the annular seal 60 so that the second plunger portion 64 is spaced apart from the seal 60 so as to break the seal on the hydraulic fluid reservoir 54 when the separation distance between the shut-off valve housings 22,24 reaches or exceeds the reference threshold value. This has the effect of permitting the exit of fluid from the hydraulic fluid reservoir 54 via the drain holes and into the bore of the first plunger housing section 40, which in turn reduces the fluid pressure in the hydraulic fluid reservoir 54.

The direct contact sensing device 34 further includes a hydraulic connecting block 68 that is in fluid communication with the bore 56 of the second plunger housing section 42. The provision of the hydraulic connecting block 68 allows the aforementioned reduction in fluid pressure in the hydraulic fluid reservoir 54 to be communicated to the indication device 32. The indication device 32 is configured to provide an indication upon detection of the aforementioned reduction in fluid pressure in the hydraulic fluid reservoir 54. The indication device 32 may be in the form of a display system which may include: a gauge to provide a visual indication of the fluid pressure reduction, and/or a pressure switch to provide an electrical indication of the fluid pressure reduction by closing an electrical circuit when the fluid pressure reduction is detected. This allows an operator or an automated monitoring system to know when the separation distance between the shut-off valve housings 22,24 has reached or exceeded the reference threshold value.

The provision of the distance monitoring and indication devices 30,32 in the pipeline coupling 20 enables the monitoring of the relative positions of the coupled shut-off valve housings 22,24 such that an indication is provided when the intended operation of the pipeline coupling 20 has been compromised by an undesirable separation between the coupled shut-off valve housings 22,24, thus allowing the integrity of the pipeline coupling 20 to be reliably monitored. In addition the distance monitoring and indication devices 30,32 of the invention provide in-situ monitoring of the integrity of the pipeline coupling 20 without requiring any disassembly or refurbishment of the pipeline coupling 20.

In addition to the direct contact sensing device the distance monitoring device may comprise a non-contact sensing device configured to monitor the separation distance between the shut-off valve housings 22,24 when they are coupled to each other. For example, the non-contact sensing device may include a proximity sensor, such as an optical sensing device (e.g. a diffuse-reflective proximity sensor) or an electrical sensing device (e.g. an inductive proximity sensor or an ultrasonic proximity sensor).

## Claims

1. A pipeline coupling (20), for use in a fluid conduit, comprising:
a pair of shut-off valve housings (22, 24) releasably coupled to each other, the shut-off valve housings (22, 24) defining a hollow bore along which flowable material may flow, the shut-off valve housings (22, 24) configured to be decoupleable from each other;
a distance monitoring device (30) configured to monitor a separation distance between the shut-off valve housings (22, 24) when they are coupled to each other; and
an indication device (32) configured to provide an indication when the distance monitoring device (30) detects that the separation distance between the shut-off valve housings (22, 24) reaches or exceeds a reference threshold value,
wherein the distance monitoring device (30) includes a direct contact sensing device (34) configured to monitor the separation distance between the shut-off valve housings (22, 24) when they are coupled to each other, wherein the direct contact sensing device (34) includes a plunger (44) coupled to a first (22) of the shut-off valve housings, the plunger (44) is arranged to be in contact with a second (24) of the shut-off valve housings, and the direct contact sensing device (34) is configured to detect a displacement of the plunger (44) when the shut-off valve housings (22, 24) are coupled to each other.

2. A pipeline coupling according to Claim 1 wherein the direct contact sensing device (34) includes an actuator configured to apply a force that urges the plunger (44) to be in contact with the second shut-off valve housing (24).

3. A pipeline coupling according to Claim 2 wherein the actuator is selected from a group including: a mechanical actuator, a pneumatic actuator, and a hydraulic actuator.

4. A pipeline coupling according to any one of the preceding claims wherein the direct contact sensing device (34) includes a fluid reservoir (54), the plunger (44) is arranged to seal the fluid reservoir (54) under pressure when the separation distance between the shut-off valve housings (22, 24) is below the reference threshold value, the plunger (44) is arranged so that, when the separation distance between the shut-off valve housings (22, 24) reaches or exceeds the reference threshold value, the displacement of the plunger (44) breaks the seal on the fluid reservoir (54) to cause a reduction in pressure of the fluid reservoir (54), and the distance monitoring device (30) is configured to communicate the reduction in pressure of the fluid reservoir (54) to the indication device (32).

5. A pipeline coupling according to Claim 4 wherein the direct contact sensing device (34) includes a seal, the plunger (44) is arranged to engage the seal so as to seal the fluid reservoir (54) under pressure when the separation distance between the shut-off valve housings (22, 24) is below the reference threshold value; and the plunger (44) is arranged to disengage from the seal so as to break the seal on the fluid reservoir (54) when the separation distance between the shut-off valve housings (22, 24) reaches or exceeds the reference threshold value.

6. A pipeline coupling according to Claim 5 wherein the plunger (44) includes first and second plunger portions (62, 64), the first plunger portion (62) is shaped to engage the seal so as to seal the fluid reservoir (54) under pressure when the separation distance between the shut-off valve housings (22, 24) is below the reference threshold value, and the second plunger portion (64) is shaped to be spaced apart from the seal so as to break the seal on the fluid reservoir (54) when the separation distance between the shut-off valve housings (22, 24) reaches or exceeds the reference threshold value.

7. A pipeline coupling according to Claim 6 wherein the second plunger portion (64) is narrower in width than the first plunger portion (62).

8. A pipeline coupling according to any one of Claims 4 to 7 wherein the fluid reservoir (54) is configured to cooperate with the plunger (44) so that the sealing of the fluid reservoir (54) under pressure applies a force that urges the plunger (44) to be in contact with the second shut-off valve housing (24).

9. A pipeline coupling according to any one of the preceding claims wherein the distance monitoring device (30) includes a non-contact sensing device configured to monitor the separation distance between the shut-off valve housings (22, 24) when they are coupled to each other.

10. A pipeline coupling according to Claim 9 wherein the non-contact sensing device includes a proximity sensor.

11. A pipeline coupling according to Claim 9 or Claim 10 wherein the distance monitoring device (30) includes an optical sensing device configured to optically monitor the separation distance between the shut-off valve housings (22, 24) when they are coupled to each other, and/or wherein the distance monitoring device (30) includes an electrical sensing device configured to electrically monitor the separation distance between the shut-off valve housings (22, 24) when they are coupled to each other.

12. A pipeline coupling according to any one of the preceding claims wherein the indication device (32) includes a visual indicator configured to provide a visual indication when the distance monitoring device (30) detects that the separation distance between the shut-off valve housings (22, 24) reaches or exceeds a reference threshold value, and/or wherein the indication device (32) includes an electrical or electronic indicator configured to provide an electrical or electronic indication when the distance monitoring device (30) detects that the separation distance between the shut-off valve housings (22, 24) reaches or exceeds a reference threshold value.

13. A pipeline coupling according to any one of the preceding claims wherein the indication device (32) is configured for communication with a remote monitoring unit, and the indication device (32) is configured to transmit, in use, electrical or electronic information to the remote monitoring unit when the distance monitoring device (30) detects that the separation distance between the shut-off valve housings (22, 24) reaches or exceeds a reference threshold value.

14. A pipeline coupling according to any one of the preceding claims further including at least one shut-off valve located within the hollow bore of at least one of the shut-off valve housings (22, 24), the or each shut-off valve including a valve member (28) movable between a valve open position and a valve closed position in which the valve member (28) shuts off the flow of a flowable material through the hollow bore, the or each valve member (28) being biased to move to its valve closed position on separation of the shut-off valve housings (22, 24).

15. Use of a pipeline coupling (20) as a breakaway coupling or a release coupling, wherein the pipeline coupling (20) is in accordance with any one of the preceding claims.

## Patentansprüche

1. Rohrleitungskopplung (20) zur Verwendung in einer Fluidleitung, die Folgendes umfasst:
ein Paar Absperrventilgehäuse (22, 24), die lösbar miteinander gekoppelt sind, wobei die Absperrventilgehäuse (22, 24) eine hohle Bohrung definieren, entlang der ein fließbares Material fließen kann, wobei die Absperrventilgehäuse (22, 24) konfiguriert sind, um voneinander entkoppelbar zu sein;
eine Abstandsüberwachungsvorrichtung (30), die konfiguriert ist, um einen Trennungsabstand zwischen den Absperrventilgehäusen (22, 24) zu überwachen, wenn sie miteinander gekoppelt sind; und
eine Anzeigevorrichtung (32), die konfiguriert ist, um eine Anzeige bereitzustellen, wenn die Abstandsüberwachungsvorrichtung (30) erkennt, dass der Trennungsabstand zwischen den Absperrventilgehäusen (22, 24) einen Referenzschwellenwert erreicht oder überschreitet,
wobei die Abstandsüberwachungsvorrichtung (30) eine Direktkontakterfassungsvorrichtung (34) beinhaltet, die konfiguriert ist, um den Trennungsabstand zwischen den Absperrventilgehäusen (22, 24) zu überwachen, wenn sie miteinander gekoppelt sind, wobei die Direktkontakterfassungsvorrichtung (34) einen Plunger (44) beinhaltet, der mit einem ersten (22) der Absperrventilgehäuse gekoppelt ist, wobei der Plunger (44) angeordnet ist, um mit einem zweiten (24) der Absperrventilgehäuse in Kontakt zu stehen, und die Direktkontakterfassungsvorrichtung (34) konfiguriert ist, um eine Verschiebung des Plungers (44) zu erkennen, wenn die Absperrventilgehäuse (22, 24) miteinander gekoppelt sind.

2. Rohrleitungskopplung nach Anspruch 1, wobei die Direktkontakterfassungsvorrichtung (34) einen Stellantrieb beinhaltet, der konfiguriert ist, um eine Kraft aufzubringen, die den Plunger (44) zwingt, um mit dem zweiten Absperrventilgehäuse (24) in Kontakt zu sein.

3. Rohrleitungskopplung nach Anspruch 2, wobei der Stellantrieb aus einer Gruppe ausgewählt ist, die Folgendes beinhaltet: einen mechanischen Stellantrieb, einen pneumatischen Stellantrieb und einen hydraulischen Stellantrieb.

4. Rohrleitungskopplung nach einem der vorhergehenden Ansprüche, wobei die Direktkontakterfassungsvorrichtung (34) einen Fluidbehälter (54) beinhaltet, wobei der Plunger (44) angeordnet ist, um den Fluidbehälter (54) unter Druck abzudichten, wenn der Trennungsabstand zwischen den Absperrventilgehäusen (22, 24) unter dem Referenzschwellenwert liegt, der Plunger (44) angeordnet ist, sodass, wenn der Trennungsabstand zwischen den Absperrventilgehäusen (22, 24) den Referenzschwellenwert erreicht oder überschreitet, die Verschiebung des Plungers (44) die Dichtung auf dem Fluidbehälter (54) bricht, um eine Druckminderung des Fluidbehälters (54) zu bewirken, und die Abstandsüberwachungsvorrichtung (30) konfiguriert ist, um die Druckminderung des Fluidbehälters (54) zu der Anzeigevorrichtung (32) zu kommunizieren.

5. Rohrleitungskopplung nach Anspruch 4, wobei die Direktkontakterfassungsvorrichtung (34) eine Dichtung beinhaltet, wobei der Plunger (44) angeordnet ist, um die Dichtung in Eingriff zu nehmen, um den Fluidbehälter (54) unter Druck abzudichten, wenn der Trennungsabstand zwischen den Absperrventilgehäusen (22, 24) unter dem Referenzschwellenwert liegt; und der Plunger (44) angeordnet ist, um sich von der Dichtung zu lösen, um die Dichtung auf dem Fluidbehälter (54) zu brechen, wenn der Trennungsabstand zwischen den Absperrventilgehäusen (22, 24) den Referenzschwellenwert erreicht oder überschreitet.

6. Rohrleitungskopplung nach Anspruch 5, wobei der Plunger (44) einen ersten und einen zweiten Plungerabschnitt (62, 64) beinhaltet, wobei der erste Plungerabschnitt (62) geformt ist, um die Dichtung in Eingriff zu nehmen, um den Fluidbehälter (54) unter Druck abzudichten, wenn der Trennungsabstand zwischen den Absperrventilgehäusen (22, 24) unter dem Referenzschwellenwert liegt und der zweite Plungerabschnitt (64) geformt ist, um von der Dichtung beabstandet zu sein, um die Dichtung auf dem Fluidbehälter (54) zu brechen, wenn der Trennungsabstand zwischen den Absperrventilgehäusen (22, 24) den Referenzschwellenwert erreicht oder überschreitet.

7. Rohrleitungskopplung nach Anspruch 6, wobei der zweite Plungerabschnitt (64) schmaler in einer Breite als der erste Plungerabschnitt (62) ist.

8. Rohrleitungskopplung nach einem der Ansprüche 4 bis 7, wobei der Fluidbehälter (54) konfiguriert ist, um mit dem Plunger (44) zusammenzuwirken, sodass das Abdichten des Fluidbehälters (54) unter Druck eine Kraft aufbringt, die den Plunger (44) zwingt, in Kontakt mit dem zweiten Absperrventilgehäuse (24) zu sein.

9. Rohrleitungskopplung nach einem der vorangehenden Ansprüche, wobei die Abstandsüberwachungsvorrichtung (30) eine kontaktlose Erfassungsvorrichtung beinhaltet, die konfiguriert ist, um den Trennungsabstand zwischen den Absperrventilgehäusen (22, 24) zu überwachen, wenn sie miteinander gekoppelt sind.

10. Rohrleitungskopplung nach Anspruch 9, wobei die kontaktlose Erfassungsvorrichtung einen Näherungssensor beinhaltet.

11. Rohrleitungskopplung nach Anspruch 9 oder 10, wobei die Abstandsüberwachungsvorrichtung (30) eine optische Erfassungsvorrichtung beinhaltet, die konfiguriert ist, um den Trennungsabstand zwischen den Absperrventilgehäusen (22, 24) optisch zu überwachen, wenn sie miteinander gekoppelt sind und/oder wobei die Abstandsüberwachungsvorrichtung (30) eine elektrische Erfassungsvorrichtung beinhaltet, die konfiguriert ist, um den Trennungsabstand zwischen den Absperrventilgehäusen (22, 24) elektrisch zu überwachen, wenn sie miteinander gekoppelt sind.

12. Rohrleitungskopplung nach einem der vorangehenden Ansprüche, wobei die Anzeigevorrichtung (32) eine visuelle Anzeige beinhaltet, die konfiguriert ist, um eine visuelle Anzeige bereitzustellen, wenn die Abstandsüberwachungsvorrichtung (30) erkennt, dass der Trennungsabstand zwischen den Absperrventilgehäusen (22, 24) einen Referenzschwellenwert erreicht oder überschreitet, und/oder wobei die Anzeigevorrichtung (32) eine elektrische oder elektronische Anzeige beinhaltet, die konfiguriert ist, um eine elektrische oder elektronische Anzeige bereitzustellen, wenn die Abstandsüberwachungsvorrichtung (30) erkennt, dass der Trennungsabstand zwischen den Absperrventilgehäusen (22, 24) einen Referenzschwellenwert erreicht oder überschreitet.

13. Rohrleitungskopplung nach einem der vorhergehenden Ansprüche, wobei die Anzeigevorrichtung (32) für eine Kommunikation mit einer entfernten Überwachungseinheit konfiguriert ist und die Anzeigevorrichtung (32) konfiguriert ist, um in Verwendung elektrische oder elektronische Informationen an die entfernte Überwachungseinheit zu übertragen, wenn die Abstandsüberwachungsvorrichtung (30) erkennt, dass der Trennungsabstand zwischen den Absperrventilgehäusen (22, 24) einen Referenzschwellenwert erreicht oder überschreitet.

14. Rohrleitungskopplung nach einem der vorangehenden Ansprüche, die ferner wenigstens ein Absperrventil beinhaltet, das sich innerhalb der hohlen Bohrung wenigstens einem der Absperrventilgehäuse (22, 24) befindet, wobei das oder jedes Absperrventil ein Ventilelement (28) beinhaltet, das zwischen einer Ventilöffnungsposition und einer Ventilschließposition bewegbar ist, in der das Ventilelement (28) den Fluss eines fließbaren Materials durch die hohle Bohrung absperrt, wobei das oder jedes Ventilelement (28) vorgespannt ist, um sich in seine Ventilschließposition bei der Trennung der Absperrventilgehäuse (22, 24) zu bewegen.

15. Verwendung einer Rohrleitungskopplung (20) als eine Abreißkopplung oder eine Lösekopplung, wobei die Rohrleitungskopplung (20) gemäß einem der vorhergehenden Ansprüche vorliegt.

## Revendications

1. Raccord de canalisation (20), destiné à être utilisé dans une conduite de fluide, comprenant :
une paire de boîtiers de vanne d'arrêt (22, 24) accouplés de manière amovible l'un à l'autre, les boîtiers de vanne d'arrêt (22, 24) définissant un alésage creux le long duquel le matériau fluide peut s'écouler, les boîtiers de vanne d'arrêt (22, 24) étant conçus pour être découplables l'un de l'autre ;
un dispositif de surveillance de distance (30) configuré pour surveiller une distance de séparation entre les boîtiers de vanne d'arrêt (22, 24) lorsqu'ils sont accouplés l'un à l'autre ; et
un dispositif d'indication (32) configuré pour fournir une indication lorsque le dispositif de surveillance de distance (30) détecte que la distance de séparation entre les boîtiers de vanne d'arrêt (22, 24) atteint ou dépasse une valeur seuil de référence,
le dispositif de surveillance de distance (30) comportant un dispositif de détection de contact direct (34) configuré pour surveiller la distance de séparation entre les boîtiers de vanne d'arrêt (22, 24) lorsqu'ils sont accouplés l'un à l'autre, le dispositif de détection de contact direct (34) comportant un plongeur (44) accouplé à un premier (22) des boîtiers de vanne d'arrêt, le plongeur (44) étant disposé pour être en contact avec un second (24) des boîtiers de vanne d'arrêt, et le dispositif de détection de contact direct (34) étant configuré pour détecter un déplacement du plongeur (44) lorsque les boîtiers de vanne d'arrêt (22, 24) sont accouplés l'un à l'autre.

2. Raccord de canalisation selon la revendication 1, le dispositif de détection de contact direct (34) comportant un actionneur conçu pour appliquer une force qui pousse le plongeur (44) à être en contact avec le second boîtier de vanne d'arrêt (24).

3. Raccord de canalisation selon la revendication 2, l'actionneur étant choisi dans un groupe comportant : un actionneur mécanique, un actionneur pneumatique et un actionneur hydraulique.

4. Raccord de canalisation selon l'une quelconque des revendications précédentes, le dispositif de détection de contact direct (34) comportant un réservoir de fluide (54), le plongeur (44) étant disposé pour sceller le réservoir de fluide (54) sous pression lorsque la distance de séparation entre les boîtiers de vannes d'arrêt (22, 24) est inférieure à la valeur seuil de référence, le plongeur (44) étant disposé de sorte que, lorsque la distance de séparation entre les boîtiers de vannes d'arrêt (22, 24) atteint ou dépasse la valeur seuil de référence, le déplacement du plongeur (44) rompt le joint sur le réservoir de fluide (54) pour provoquer une réduction de pression du réservoir de fluide (54), et le dispositif de surveillance de distance (30) étant configuré pour communiquer la réduction de pression du réservoir de fluide (54) au dispositif d'indication (32).

5. Raccord de canalisation selon la revendication 4, le dispositif de détection de contact direct (34) comportant un joint, le plongeur (44) étant disposé pour entrer en prise avec le joint de manière à sceller le réservoir de fluide (54) sous pression lorsque la distance de séparation entre les boîtiers de vanne d'arrêt (22, 24) est inférieure à la valeur seuil de référence ; et le plongeur (44) étant disposé pour se dégager du joint de manière à rompre le joint sur le réservoir de fluide (54) lorsque la distance de séparation entre les boîtiers de vanne d'arrêt (22, 24) atteint ou dépasse la valeur seuil de référence.

6. Raccord de canalisation selon la revendication 5, le plongeur (44) comportant des première et seconde parties de plongeur (62, 64), la première partie de plongeur (62) étant formée pour entrer en prise avec le joint de manière à sceller le réservoir de fluide (54) sous pression lorsque la distance de séparation entre les boîtiers de vanne d'arrêt (22, 24) est inférieure à la valeur seuil de référence, et la seconde partie de plongeur (64) étant formée pour être espacée du joint afin de rompre le joint sur le réservoir de fluide (54) lorsque la distance de séparation entre les boîtiers de vannes d'arrêt (22, 24) atteint ou dépasse la valeur seuil de référence.

7. Raccord de canalisation selon la revendication 6, la seconde partie de plongeur (64) étant plus étroite en largeur que la première partie de plongeur (62).

8. Raccord de canalisation selon l'une quelconque des revendications 4 à 7, le réservoir de fluide (54) étant conçu pour coopérer avec le plongeur (44) de sorte que l'étanchéité du réservoir de fluide (54) sous pression applique une force qui pousse le plongeur (44) à être en contact avec le second boîtier de vanne d'arrêt (24).

9. Raccord de canalisation selon l'une quelconque des revendications précédentes, le dispositif de surveillance de distance (30) comportant un dispositif de détection sans contact configuré pour surveiller la distance de séparation entre les boîtiers de vannes d'arrêt (22, 24) lorsqu'ils sont accouplés l'un à l'autre.

10. Raccord de canalisation selon la revendication 9, le dispositif de détection sans contact comportant un capteur de proximité.

11. Raccord de canalisation selon la revendication 9 ou la revendication 10, le dispositif de surveillance de distance (30) comportant un dispositif de détection optique configuré pour surveiller optiquement la distance de séparation entre les boîtiers de vanne d'arrêt (22, 24) lorsqu'ils sont accouplés l'un à l'autre, et/ou le dispositif de surveillance de distance (30) comportant un dispositif de détection électrique configuré pour surveiller électriquement la distance de séparation entre les boîtiers de vanne d'arrêt (22, 24) lorsqu'ils sont accouplés l'un à l'autre.

12. Raccord de canalisation selon l'une quelconque des revendications précédentes, le dispositif d'indication (32) comportant un indicateur visuel configuré pour fournir une indication visuelle lorsque le dispositif de surveillance de distance (30) détecte que la distance de séparation entre les boîtiers de vanne d'arrêt (22, 24) atteint ou dépasse une valeur seuil de référence, et/ou le dispositif d'indication (32) comportant un indicateur électrique ou électronique configuré pour fournir une indication électrique ou électronique lorsque le dispositif de surveillance de distance (30) détecte que la distance de séparation entre les boîtiers de vannes d'arrêt (22, 24) atteint ou dépasse une valeur seuil de référence.

13. Raccord de canalisation selon l'une quelconque des revendications précédentes, le dispositif d'indication (32) étant configuré pour communiquer avec une unité de surveillance à distance, et le dispositif d'indication (32) étant configuré pour transmettre, en cours d'utilisation, des informations électriques ou électroniques à l'unité de surveillance à distance lorsque le dispositif de surveillance de distance (30) détecte que la distance de séparation entre les boîtiers de vanne d'arrêt (22, 24) atteint ou dépasse une valeur seuil de référence.

14. Raccord de canalisation selon l'une quelconque des revendications précédentes, comportant en outre au moins une vanne d'arrêt située à l'intérieur de l'alésage creux d'au moins un des boîtiers de vanne d'arrêt (22, 24), la ou chaque vanne d'arrêt comportant un élément de vanne (28) mobile entre une position ouverte de vanne et une position fermée de vanne dans laquelle l'élément de vanne (28) arrête l'écoulement d'un matériau fluide à travers l'alésage creux, le ou chaque élément de vanne (28) étant sollicité pour se déplacer à sa position fermée de vanne lors de la séparation des boîtiers de vanne d'arrêt (22, 24).

15. Utilisation d'un raccord de canalisation (20) en tant que raccord de rupture ou raccord de libération, le raccord de canalisation (20) étant conforme à l'une quelconque des revendications précédentes.
